# FASCICULE DE BREVET EUROPEEN

(11) **EP 3 749 844 B1**
(45) Date de publication et mention de la délivrance du brevet: **30.03.2022**
(21) Numéro de dépôt: 19710731.1
(22) Date de dépôt: 08.02.2019
(51) Int. Cl.: F02K 5/00, B64C 29/00

(54) **PROPULSION HYBRIDE POUR UN AÉRONEF**
HYBRIDANTRIEB FÜR EIN FLUGZEUG
HYBRID PROPULSION SYSTEM FOR AN AIRCRAFT

(30) Priorité: 09.02.2018 FR 1851124
(43) Date de publication de la demande: 16.12.2020
(73) Titulaire: SAFRAN, 75015 Paris (FR)
(72) Inventeur: CHESNEAU, Gaetan, 77550 MOISSY-CRAMAYEL (FR)
(74) Mandataire: Brevalex
(86) Numéro de dépôt international: PCT/FR2019/050284
(87) Numéro de publication internationale: WO 2019/155173

(56) Documents cités:
- EP-A1- 3 135 922
- WO-A1-91/17083
- WO-A1-2016/020618
- WO-A2-2010/067172
- US-A- 3 273 654

## Description

Le sujet de l'invention présente est d'abord un dispositif de propulsion hybride pour un aéronef, puis des procédés de propulsion particuliers faisant appel à ce dispositif.

Les performances des aéronefs peuvent s'exprimer par ces caractéristiques de poussée, de rayon d'action pour une masse totale déterminée, ainsi que par les performances au décollage et en montée (longueur de piste nécessaire et taux de montée), notamment. Les exigences principales sont d'ailleurs différentes selon les régimes de fonctionnement, notamment entre le régime de croisière et les régimes transitoires. Des propulsions hybrides ont donc été déjà proposées pour modifier les performances des turbomachines classiques dans certaines circonstances, en leur adjoignant des machines électriques.

Plusieurs conceptions ont déjà été proposées ; certaines sont décrites dans le document WO 2016/020618 A, qui décrit comment l'addition de machines électriques (moteurs ou générateurs) permet d'injecter de la puissance supplémentaire sur l'arbre haute pression ou l'arbre basse pression, ou au contraire de leur soutirer de la puissance, qui est transformée en électricité pour les charges (équipements et servitudes) de l'avion, ou pour recharger une batterie, dont l'énergie pourra ensuite être restituée au turbomoteur par l'intermédiaire d'un moteur électrique ; des transferts de puissance de l'arbre haute pression à l'arbre basse pression sont aussi possibles. L'ajustement fin des puissances fournies par les arbres haute pression et basse pression permet d'améliorer le rendement de la machine, notamment pour une optimisation de la marge au pompage des compresseurs.

Dans une conception particulière présentée dans ce document, une énergie d'une soufflante d'entrée de la turbomachine est exploitée dans un régime dit d'auto-rotation, lorsque la turbomachine est éteinte, en débrayant la soufflante du reste de l'arbre basse pression et en transformant son énergie mécanique d'auto-rotation en énergie électrique grâce à un générateur placé entre la soufflante et l'embrayage sur le bout d'arbre correspondant. Mais ce dispositif particulier ne permet pas, notamment, d'améliorer les performances des moteurs au décollage et à la montée. L'utilisation d'un embrayage classique, relâché et mis en prise à volonté par un dispositif de commande et un actionneur, n'est par ailleurs pas sans inconvénients à cause du poids supplémentaire qu'il implique.

WO 2010/067172 A2 décrit un arbre de turbomachine pourvu d'une soufflante débrayable de la portion comprenant les compresseurs et turbines, et associé à une machine électrique réversible.

Un objet de l'invention est donc d'améliorer en général les performances de l'aéronef, au moyen d'un dispositif simple et impliquant une augmentation de poids moins importante que les dispositifs de propulsion hybride connus.

Sous une forme générale, l'invention concerne un dispositif de de propulsion hybride pour un aéronef, comprenant une turbomachine munie d'un arbre basse pression, l'arbre basse pression portant une soufflante disposée à une entrée d'air de la turbomachine, une machine électrique réversible associée à l'arbre basse pression par une transmission mécanique de mouvement, un embrayage disposé sur l'arbre basse pression entre la soufflante et un compresseur basse pression, caractérisé en ce que l'arbre basse pression est composé de deux portions en prolongement, séparables et reconnectables, le dispositif comprend un carter composé de deux portions, une première desdites portions du carter est basculante autour d'un axe transversal par rapport à une seconde desdites portions du carter, une desdites portions de l'arbre base pression, la soufflante et la machine électrique réversible sont montées sur la première portion du carter, et l'autre desdites portions de l'arbre basse pression est montée sur la seconde portion du carter.

Cet agencement rend possible une propulsion additionnelle au moyen de la soufflante indépendamment du fonctionnement de la turbomachine principale. Le dispositif est par ailleurs simple et peu pesant. Il faut mentionner particulièrement l'intérêt de l'embrayage unidirectionnel, plus léger qu'un embrayage normal, qui n'impose pas de système de commande ni d'actionneur et permet la solidarisation habituelle du corps basse pression et de la soufflante pendant des circonstances ordinaires, tout en permettant d'utiliser la soufflante seule ou indépendamment du reste du moteur, quand cela est nécessaire pour fournir une poussée purement électrique en cas d'arrêt moteur souhaité (taxiage électrique par le « fan » (soufflante) au sol, vol purement électrique quand cela est possible) ou non (panne de la turbomachine en vol). Malgré sa simplicité, le dispositif conforme à l'invention permet les modes de fonctionnement hybrides principaux offerts par d'autres dispositifs plus compliqués, et notamment le prélèvement de puissance sur l'un ou l'autre des deux arbres, la fourniture de puissance au corps haute pression ou le transfert de puissance entre les deux arbres.

La construction de l'invention permet d'orienter la direction de la soufflante indépendamment du reste de l'aéronef et peut procurer, par exemple, une composante verticale plus grande de la poussée, particulièrement intéressante au moment du décollage.

Avantageusement et selon diverses possibilités optionnelles et indépendantes, l'embrayage est un dispositif passif à roue libre ; le rapport de vitesse des deux parties de l'arbre que sépare l'embrayage et qui commande le changement d'état de l'embrayage est égal à 1 (ce rapport peut être modifié en ajoutant une boîte d'engrenage à l'embrayage, en alourdissant le dispositif avec l'espoir d'obtenir des performances meilleures si la soufflante tourne à une vitesse plus basse que le reste du corps basse pression) ; la deuxième machine électrique réversible est associée à la même batterie que la première par la liaison électrique, encore afin de simplifier le dispositif, les deux machines pouvant alors indifféremment soutirer de l'énergie à la batterie ou lui en remettre ; et la première et la deuxième transmissions mécaniques de mouvement comprennent principalement des engrenages.

Selon une autre caractéristique optionnelle, mais importante, du dispositif, la deuxième machine électrique réversible est complètement séparée de l'arbre haute pression, et la première et la deuxième transmission mécanique de mouvement sont dépourvues de tout moyen de désaccouplement.

En associant chaque machine électrique à un seul arbre respectif du turbomoteur, les transmissions sont moins nombreuses et peuvent être fortement simplifiées. De plus, il est alors possible et avantageux de les construire sans aucun organe permettant un désaccouplement sélectif d'une transmission inutilisée : l'économie de ces organes et de leurs moyens de commande permet d'alléger l'aéronef tout en évitant des risques d'accidents en cas de mauvais fonctionnement de ces organes ou de leurs actionneurs.

Une autre construction particulière, d'après laquelle la soufflante a des pales à calage variable et inversion de sens de poussée, permet de diminuer artificiellement la poussée alors que la turbomachine doit rester allumée, par une inversion de poussée réalisée sur la seule soufflante, ce qui est avantageux pour réaliser un mode d'aérofrein au moment de la descente, alors qu'un prélèvement de puissance par les machines électriques imposerait une réduction de la vitesse de rotation des arbres.

L'invention sera maintenant décrite en liaison aux figures suivantes :
- la figure 1 est une vue schématique d'un dispositif de propulsion usuel, ne permettant pas de propulsion hybride ;
- la figure 2 illustre un dispositif de propulsion hybride qui n'est pas conforme à l'invention ;
- la figure 3 illustre partiellement le dispositif conforme à l'invention ;
- les figures 4, 5, 6, 7, 8, 9 et 10 illustrent différents modes de fonctionnement du dispositif ;
- la figure 11 est un diagramme de vol illustrant les différents modes ; et
- les figures 12, 13 et 14 illustrent la construction particulière à l'invention.

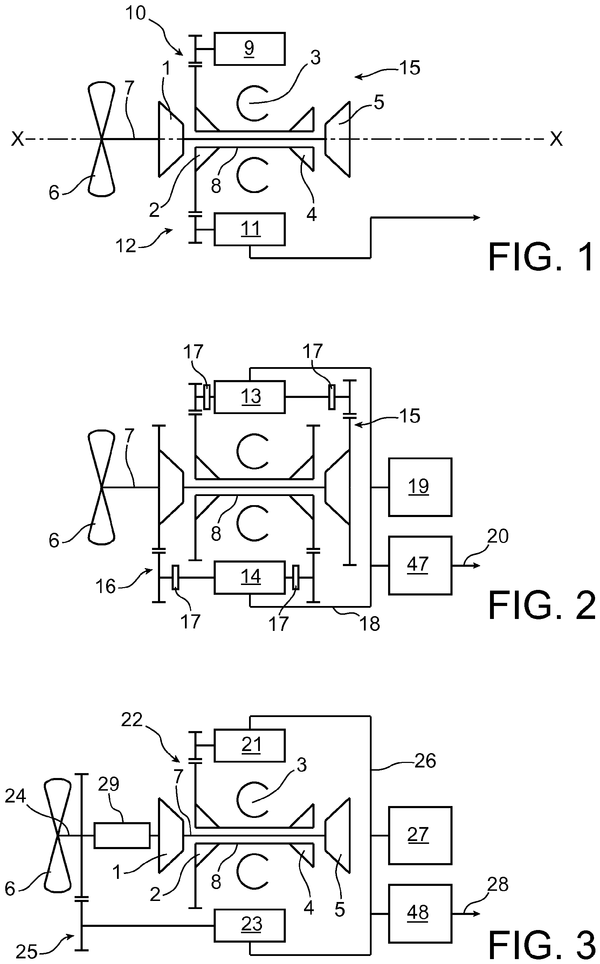

On se reporte à la figure 1. Un dispositif de propulsion classique comprend, très schématisés, un compresseur basse pression 1, un compresseur haute pression 2, une chambre de combustion 3, une turbine haute pression 4, une turbine basse pression 5 alignés successivement le long d'un axe X-X du moteur de l'avant vers l'arrière de l'aéronef. Toutefois, l'alignement peut être complété par une soufflante 6 disposée à l'avant du compresseur basse pression 1 et composée de pales de plus grand diamètre. Le moteur peut être un turboréacteur, si la soufflante 6 est carénée par un carter tout comme le reste du moteur, ou un turbopropulseur si la soufflante 6 n'est pas carénée. Un arbre basse pression 7 porte les aubes de la soufflante 6 ainsi que les aubes mobiles du compresseur basse pression 1 et de la turbine basse pression 5 pour former un corps basse pression ; et un arbre haute pression 8 entourant le précédent entre le compresseur basse pression 1 et la turbine haute pression 5, porte les aubes mobiles du compresseur haute pression 2 et de la turbine haute pression 4 pour former un corps haute pression. Les deux arbres 7 et 8 sont concentriques et alignés avec l'axe X-X. Le moteur est complété par un démarreur 9, apte à faire tourner l'arbre haute pression 8 par une première transmission 10, et un générateur d'électricité 11, entraîné par l'arbre haute pression 8 au moyen d'une deuxième transmission 12 et qui fournit l'électricité nécessaire aux charges (équipements et servitudes) de l'aéronef, en soutirant donc une partie de l'énergie produite par le moteur pendant son fonctionnement. Il est possible d'intercaler un réducteur de vitesse entre la soufflante 6 et le compresseur basse pression 1 pour abaisser la vitesse de rotation de celle-là par rapport à celui-ci et espérer d'améliorer les performances d'ensemble du système ; mais ce dispositif, n'étant pas hybridé, comporte de toute façon un seul mode de fonctionnement (en excluant le démarrage).

Un dispositif possible d'hybridation de propulsion du moteur, permettant d'obtenir de nombreux modes particuliers de fonctionnement, est illustré à la figure 2 et consiste à remplacer le démarreur 9 et le générateur 11 par des machines électriques réversibles, respectivement 13 et 14, et à ajouter deux transmissions supplémentaires 15 et 16 reliant respectivement les machines électriques 13 et 14 à l'arbre basse pression 7. Afin d'éviter les blocages par hyperstaticité, toutes les transmissions 10, 12 et 15, 16 sont munies d'un organe de découplage 17 afin que chaque machine électrique 13 ou 14 soit reliée en rotation à au plus un des arbres 7 et 8. Les machines électriques 13 et 14 sont par ailleurs reliées électriquement, par un réseau 18, à une batterie 19 commune en plus d'être reliées aussi aux charges de l'aéronef par une autre partie du réseau 20 et des convertisseurs de courant 47. Ce dispositif permet donc de prélever de la puissance sur chacun des arbres 7 et 8, ou au contraire de leur fournir de la puissance, simultanément ou en réalisant un transfert de puissance mécanique d'un des arbres 7 ou 8 à l'autre par les deux machines électriques 13 et 14, en chargeant ou déchargeant la batterie 19, ou, dans le dernier cas, éventuellement sans les charger ni les décharger. Mais il est manifeste que ce dispositif est lourd et compliqué à mettre en œuvre et que la commande ou le réglage correct des organes de découplage 17 peut se révéler délicat.

On passe à la figure 3. L'invention reprend les éléments classiques d'une turbomachine thermique, à savoir le compresseur basse pression 1, le compresseur haute pression 2, la chambre de combustion 3, la turbine haute pression 4, la turbine basse pression 5, la soufflante 6, l'arbre basse pression 7 et l'arbre haute pression 8 ; ce moteur peut être un turboréacteur ou un turbopropulseur; et les autres éléments principaux de l'invention sont une première machine électrique 23 réversible reliée à une partie antérieure 24 de l'arbre basse pression 8 par une première transmission 25, une deuxième machine électrique 21 réversible reliée à l'arbre haute pression 8 par une deuxième transmission 22, un réseau électrique 26 dédié reliant les machines électriques 21 et 23 à une batterie 27 commune (ou à des batteries séparées) et aux charges de l'aéronef par une autre partie du réseau 28 et des convertisseurs de courant 48, et enfin un embrayage unidirectionnel tel qu'un embrayage à roue libre 29 séparant la partie antérieure 24 de la partie principale de l'arbre basse pression 7 ; l'embrayage à roue libre 29 est orienté de façon qu'il se relâche et devient libre si le rapport de vitesse entre la partie antérieure 24 et le reste de l'arbre basse pression 7 dépasse un seuil, et transmet le mouvement dans le cas contraire, avec l'effet que la soufflante 6 restera solidaire du corps basse pression en général, mais qu'elle pourra tourner indépendamment de lui si une vitesse plus grande lui est imprimée par la première machine électrique 23. Le seuil de rapport de vitesse où la commutation des états de l'embrayage à roue libre 29 se produit peut être différent de 1 si un réducteur de vitesse lui est adjoint. Les transmissions 22 et 25 sont complètement dépourvues d'organes de couplage permettant un désaccouplement sélectif et sont donc composées d'éléments comprenant notamment des engrenages, imposant un rapport de vitesse invariable et permanent entre les rotors des machines électriques 21 et 23 et, respectivement, l'arbre haute pression 8 et la partie antérieure 24. Les machines électriques 21 et 23 sont commandées indépendamment l'une de l'autre entre les états moteur et générateur. Elles sont mécaniquement déconnectées l'une de l'autre aussi, la deuxième étant par ailleurs complètement indépendante de la rotation de l'arbre basse pression 7 et de sa partie antérieure 24, et la première 23 complètement indépendante de la rotation de l'arbre haute pression 8.

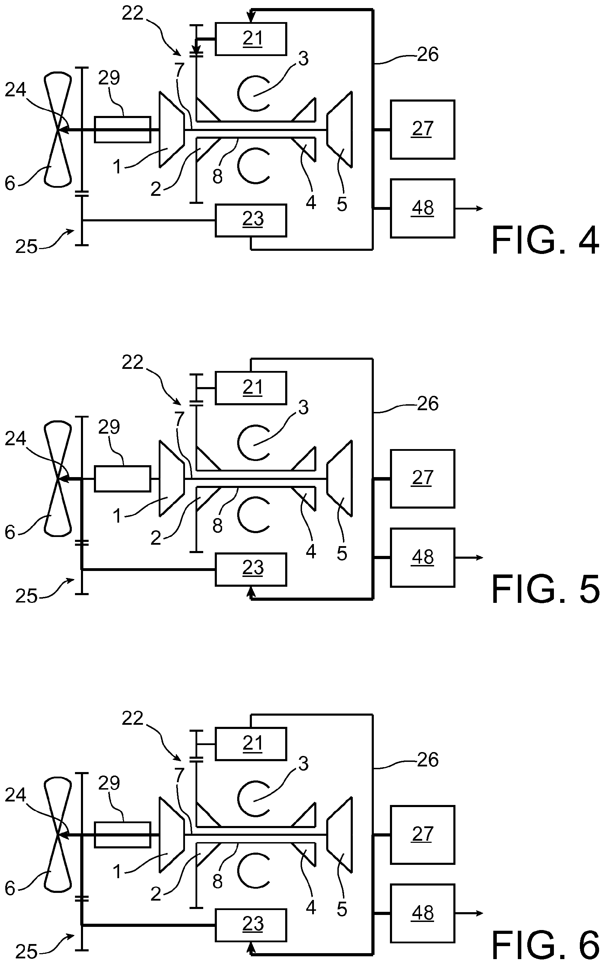

Les modes principaux de fonctionnement de ce dispositif hybride seront maintenant décrits au moyen des figures suivantes, dans l'ordre approximatif qu'on peut rencontrer au cours d'un vol réel. Le premier, représenté à la figure 4, est un démarrage de la turbomachine initialement à l'arrêt, la deuxième machine électrique 21 soutirant de l'énergie électrique de la batterie 27 pour entraîner l'arbre haute pression 8. Ce mode peut se rencontrer en vol, pour faire redémarrer la turbomachine.

Il est toutefois possible d'appliquer auparavant un mode dit électrique pur pour effectuer par exemple des mouvements de taxiage au sol. La figure 5 montre que la batterie 27 est alors utilisée pour alimenter la première machine électrique 23 et faire tourner la soufflante 6, le reste du moteur (et en particulier la partie de l'arbre basse pression 7 qui est au-delà de l'embrayage à roue libre 29, vers l'arrière du dispositif) restant au repos grâce au relâchement de l'embrayage à roue libre 29, qui permet donc d'éviter toute perte de puissance en faisant tourner inutilement à vide l'arbre basse pression 7.

Ce mode peut aussi être utilisé à l'atterrissage au sol, ou pendant la descente précédent l'atterrissage si l'arrêt de la turbomachine peut être accepté. L'utilisation de ce mode électrique pur sera alors particulièrement intéressante pour économiser du carburant et permettre donc l'augmentation du rayon d'action de l'aéronef.

Quand la turbomachine a été allumée et que le décollage a été entrepris, le mode de la figure 6 pourrait être préféré : la poussée offerte par la combustion du carburant est renforcée par une poussée supplémentaire exercée par la première machine électrique 23 sur la soufflante 6, l'embrayage à roue libre 29 étant transmetteur de mouvement. Il s'agit donc d'un mode où on cumule la poussée classique, obtenue par la combustion de carburant dans la chambre 3, et la poussée du mode purement électrique décrit à la figure 5. Le mode de la figure 6 permet donc d'augmenter les performances de l'aéronef utile au décollage et à la montée.

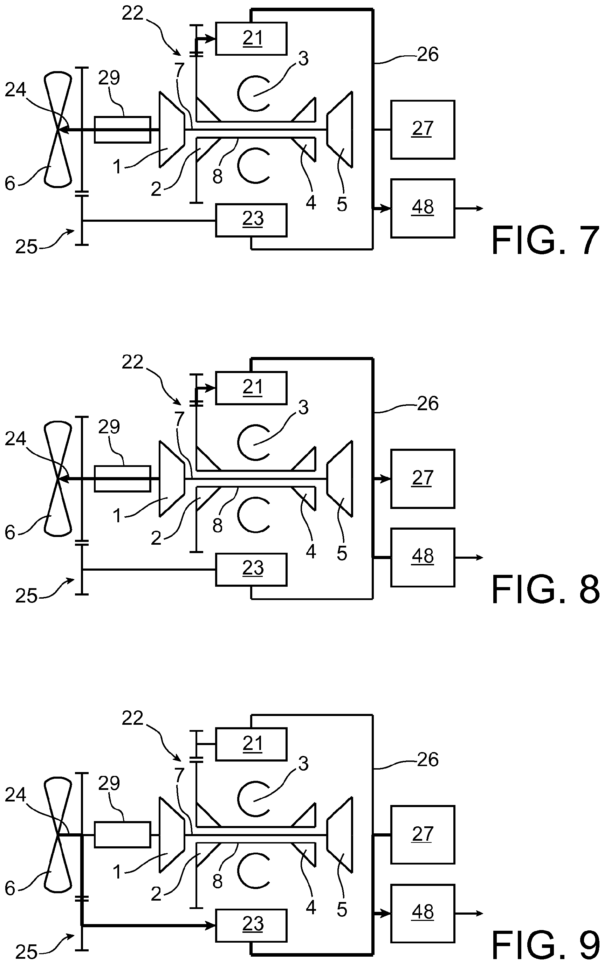

Quand le régime de croisière est atteint, on pourra envisager de recourir, selon le cas, à l'un ou l'autre des modes des figures 7 et 8, où la première machine électrique 23 devient inactive, l'embrayage à roue libre 29 reste transmetteur du mouvement de rotation de l'arbre basse pression 7 à la soufflante 6, et la deuxième machine électrique 21 fonctionne en générateur d'électricité pour alimenter les équipements et servitudes de l'aéronef, sans recharger la batterie 27 (figure 7), ou au contraire en la rechargeant (figure 8), soutirant alors une puissance plus importante de la turbomachine. L'un ou l'autre de ces modes pourra être préféré selon le recours à la batterie 27 qui sera prévisible : si la batterie 27 n'a pas besoin d'être rechargée en vol, et notamment s'il est envisagé de la remplacer par une batterie pleine après l'atterrissage, le mode de la figure 7 sera préféré.

Un mode particulier est décrit à la figure 9 ; il peut être appliqué en cas d'arrêt de la turbomachine en vol par panne consécutive à un vidage complet de la batterie 27, et il permet de recharger cette dernière rapidement. La turbomachine étant alors éteinte, on exploite l'auto-rotation de la soufflante 6 pour faire travailler la première machine électrique 23 en générateur et recharger la batterie 27 tout en fournissant l'électricité au reste de l'aéronef. L'embrayage à roue libre 29 est alors relâché, donc ici aussi, la rotation de la soufflante 6 laisse l'arbre basse pression 7 en arrière de l'embrayage à roue libre 29 immobile, et aucune perte d'énergie mécanique n'y est produite.

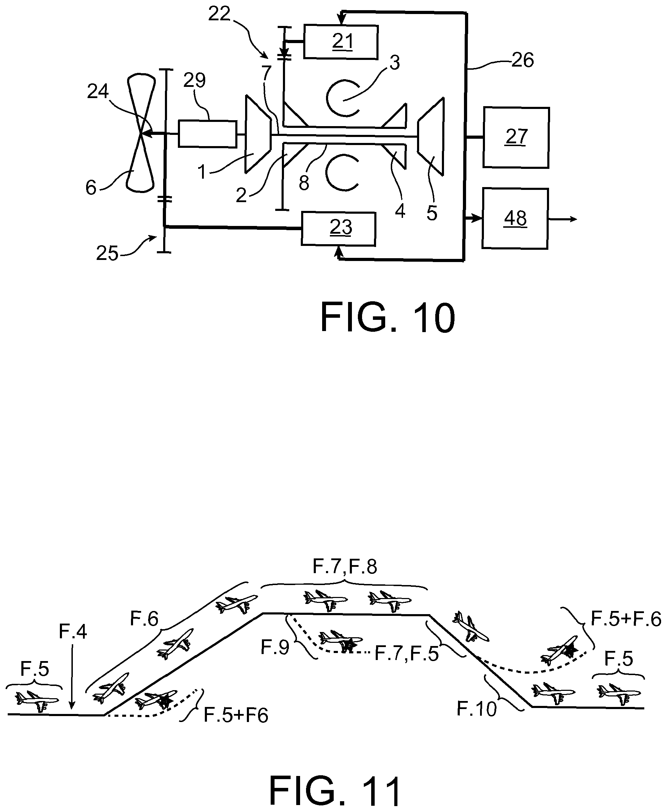

Un dernier mode important (figure 10), dit d'aérofrein, est appliqué éventuellement vers la fin de la descente quand on souhaite ralentir rapidement l'aéronef sans éteindre la turbomachine. Les deux machines électriques 21 et 23 travaillent toutes deux en moteur et entraînent donc respectivement l'arbre haute pression 8 et la soufflante 6. Une inversion de poussée de cette dernière a toutefois été réalisée, s'il est possible d'inverser le calage de ses pales (c'est-à-dire leur sens d'inclinaison latérale) pour permettre cette inversion de poussée. Des hélices ou des soufflantes à calage variable sont courantes dans l'art et ne seront pas plus décrites ici.

La figure 11 illustre l'application des différents modes pendant un vol réel. On y a représenté les phases nécessaires d'un vol, sans exclure les mouvements au sol avant le décollage et après l'atterrissage. Les notations F.4 à F.10 signifient que l'état de la figure de numéro correspondant peut être appliqué. D'autres régimes de vol sont évidemment possibles selon les circonstances, voire si une panne d'un moteur apparaît. Un avantage de l'invention est donc de favoriser des décollages et des montées plus verticaux, et des atterrissages et descentes plus verticaux, et aussi d'augmenter les portées entre deux points de posé. L'emploi des modes les plus caractéristiques de l'invention ne sera cependant pas toujours préférée ; il sera aussi possible de choisir des propulsions différentes pour les moteurs du même aéronef et obtenir ainsi des caractéristiques atténuées des différents modes : la figure 11 illustre ainsi (en F5+F6) une variante de décollage et de montée moins vertical, où un seul moteur fonctionne selon la figure 6, et un autre selon la figure 5 ; et une descente moins verticale (ou une interruption de descente) en fin de vol, où ici encore un seul moteur fonctionne selon la figure 5, et l'autre selon la figure 6 ; ce mode mixte peut donc servir à deux phases opposées du vol.

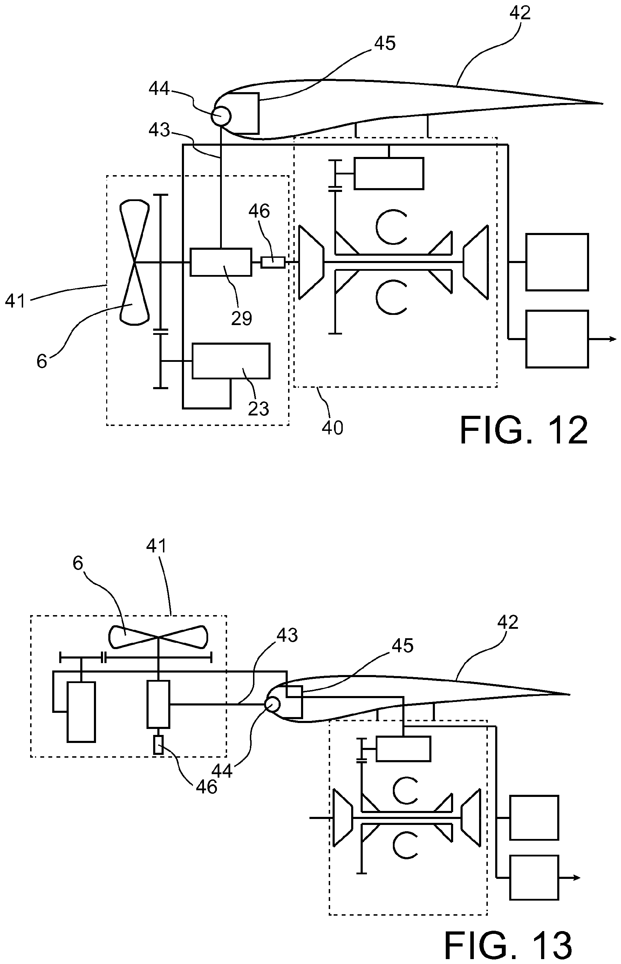

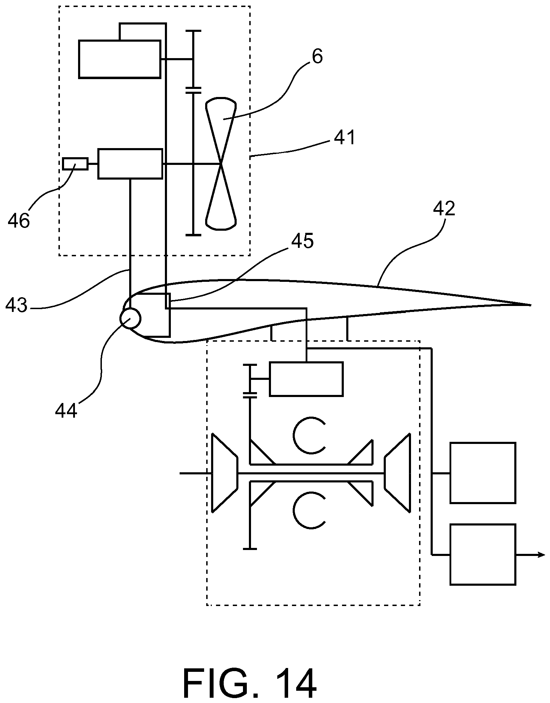

Les figures 12, 13 et 14 illustrent une construction particulière, caractéristique de l'invention et permettant d'accentuer certains des avantages indiqués ci-dessus. Le carter du dispositif est divisé et comprend une portion principale 40, enveloppant notamment les compresseurs 1 et 2, la chambre de combustion 3 et les turbines 4 et 5, ainsi que la deuxième machine électrique 21, et une portion antérieure 41 enveloppant la portion antérieure 24 de l'arbre basse pression 7, la première machine électrique 23, l'embrayage à roue libre 29, et soutenant en l'enveloppant ou non la soufflante 6. La portion principale 40 est montée rigidement à la nacelle 42 de suspension du moteur à l'aéronef, et la portion antérieure 41 lui est reliée par un bras 43 et une charnière 44 d'axe horizontal transversal (à l'état non incliné de l'aéronef) monté dans la nacelle 42. La figure 12 représente le système à l'état habituel, où les portions 40 et 41 du carter sont consécutives et en prolongement. Mais si une rotation est appliquée au bras 43 par un moteur 45 pouvant être logé dans la nacelle 42, la portion antérieure 41 peut être basculée vers l'avant et le haut jusqu'à ce que (figure 13) la soufflante 6 soit dirigée vers le haut et d'axe vertical, voire jusqu'à un état (figure 14) où la portion antérieure 41 accomplit un demi-tour, plaçant la soufflante 6 hors de la nacelle 42, tout en lui restituant un axe horizontal.

Dans ces états des figures 13 et 14, la rotation de la soufflante 6 est possible seulement par la première machine électrique 23, l'arbre basse pression 7 étant alors divisé en deux portions séparées qui reviennent en prolongement et se reconnectent (moyennant un accouplement 46 approprié à leur jonction) seulement en revenant à l'état de la figure 12. L'une des portions, antérieure, est montée sur la portion antérieure 41 du carter avec notamment la soufflante 6 et la première machine électrique 23, et l'autre des portions, postérieure, de l'aube basse pression 7 est montée sur la portion principale 40 du carter.

Dans la position de la figure 13, l'actionnement de la soufflante 6 produit par la première machine électrique 23 aurait pour conséquence de produire une composante de poussée ascendante sur l'aéronef, avec donc pour conséquence l'avantage d'un décollage et d'une montée facilités. Un mode de fonctionnement analogue à celui de la figure 6, où le moteur thermique et la soufflante contribuent tous deux à la poussée pourra être envisagé. La position de la figure 14, où un demi-tour aura été appliqué à la soufflante 6, serait utile pour lui faire produire une inversion de poussée permettant le mode d'aérofrein sans devoir modifier le calage des pales.

## Revendications

1. Dispositif de propulsion hybride pour un aéronef, comprenant une turbomachine munie d'un arbre basse pression (7), l'arbre basse pression (7) portant une soufflante (6) disposée à une entrée d'air de la turbomachine, une machine électrique (23) réversible associée à l'arbre basse pression (7) par une transmission (25) mécanique de mouvement, un embrayage unidirectionnel (29) disposé sur l'arbre basse pression (7) entre la soufflante (6) et un compresseur basse pression (1), **caractérisé en ce que** l'arbre basse pression est composé de deux portions en prolongement, séparables et reconnectables, le dispositif comprend un carter composé de deux portions (40, 41), une première desdites portions du carter (41) est basculante autour d'un axe transversal par rapport à une seconde (40) desdites portion du carter, une desdites portions de l'arbre base pression, la soufflante (6) et la machine électrique (23) réversible sont montées sur la première portion du carter (41), et l'autre desdites portions de l'arbre basse pression est montée sur la seconde portion du carter (40).

2. Dispositif de propulsion hybride selon la revendication 1, **caractérisé en ce que** l'embrayage (29) est un dispositif passif à roue libre, l'embrayage (29) passant d'un état de solidarisation à un état relâché pour un accroissement d'un rapport d'une vitesse de rotation de la soufflante sur une vitesse de rotation du compresseur basse pression, la machine électrique réversible étant reliée à la transmission (25) à l'arbre basse pression entre la soufflante (6) et l'embrayage (29), et associée par une liaison électrique (26) à une batterie (27) de l'aéronef.

3. Dispositif de propulsion hybride selon l'une quelconque des revendications 1 ou 2, **caractérisé en ce que** la soufflante (6) a des pales à calage variable à inversion de sens de poussée.

4. Dispositif de propulsion hybride selon la revendication 2, **caractérisé en ce que** ledit rapport est égal à 1.

5. Dispositif de propulsion hybride selon l'une quelconque des revendications 1 à 4, **caractérisé en ce que** la turbomachine est munie d'un arbre haute pression (8), une deuxième machine électrique réversible (21) est associée à l'arbre haute pression (8) par une deuxième transmission (22) mécanique de mouvement, les machines électriques associées à l'arbre basse pression et à l'arbre haute pression étant commandées indépendamment à un état générateur ou un état moteur.

6. Dispositif de propulsion hybride selon la revendication 5, **caractérisé en ce que** la deuxième machine électrique (21) réversible est aussi associée à ladite batterie (27) par la liaison électrique (26).

7. Dispositif de propulsion hybride selon l'une quelconque des revendications 5 ou 6, **caractérisé en ce que** la deuxième machine électrique (21) réversible est complètement séparée de l'arbre basse pression (7), la machine électrique (23) réversible associée à l'arbre basse pression est complètement séparée de l'arbre haute pression (8), et les transmissions mécaniques (22, 25) de mouvement associées à l'arbre basse pression et à l'arbre haute pression sont dépourvues de tout moyen de désaccouplement.

8. Aéronef, **caractérisé en ce qu'**il comprend un dispositif de propulsion hybride selon l'une quelconque des revendications précédentes, ledit axe correspondant à un axe transversal horizontal de l'aéronef.

## Patentansprüche

1. Hybridantriebsvorrichtung für ein Flugzeug, mit einer Turbomaschine, die mit einer Niederdruckwelle (7) ausgerüstet ist, wobei die Niederdruckwelle (7) ein an einem Lufteinlass der Turbomaschine angeordnetes Gebläse (6) trägt, einer umkehrbaren elektrischen Maschine (23), die über ein mechanisches Bewegungsgetriebe (25) mit der Niederdruckwelle (7) verbunden ist, einer Einwegkupplung (29), die auf der Niederdruckwelle (7) zwischen dem Gebläse (6) und einem Niederdruckkompressor (1) angeordnet ist, **dadurch gekennzeichnet, dass** die Niederdruckwelle aus zwei verlängerten, trennbaren und wiederverbindbaren Abschnitten besteht, die Vorrichtung ein aus zwei Abschnitten (40, 41) bestehendes Gehäuse aufweist, ein erster der Gehäuseabschnitte (41) bezüglich eines zweiten (40) der Gehäuseabschnitte um eine Querachse schwenkbar ist, einer der Abschnitte der Niederdruckwelle, das Gebläse (6) und die umkehrbare elektrische Maschine (23) an dem ersten Abschnitt des Gehäuses (41) angebracht sind, und der andere der Abschnitte der Niederdruckwelle an dem zweiten Abschnitt des Gehäuses (40) angebracht ist.

2. Hybridantriebsvorrichtung nach Anspruch 1, **dadurch gekennzeichnet, dass** die Kupplung (29) eine passive Freilaufvorrichtung ist, wobei die Kupplung (29) zur Erhöhung eines Verhältnisses einer Drehzahl des Gebläses zu einer Drehzahl des Niederdruckkompressors von einem fest verbundenen Zustand in einen gelösten Zustand übergeht, wobei die umkehrbare elektrische Maschine mit dem Getriebe (25) mit der Niederdruckwelle zwischen dem Gebläse (6) und der Kupplung (29) angeschlossen und über eine elektrische Verbindung (26) mit einer Batterie (27) des Flugzeugs verbunden ist.

3. Hybridantriebsvorrichtung nach einem der Ansprüche 1 oder 2, **dadurch gekennzeichnet, dass** das Gebläse (6) Leitschaufeln aufweist, die zur Umkehrung der Schubrichtung verstellbar sind.

4. Hybridantriebsvorrichtung nach Anspruch 2, **dadurch gekennzeichnet, dass** das Verhältnis gleich 1 ist.

5. Hybridantriebsvorrichtung nach einem der Ansprüche 1 bis 4, **dadurch gekennzeichnet, dass** die Turbomaschine mit einer Hochdruckwelle (8) ausgerüstet ist, eine zweite umkehrbare elektrische Maschine (21) über ein zweites mechanisches Bewegungsgetriebe (22) mit der Hochdruckwelle (8) verbunden ist, wobei die mit der Niederdruckwelle und der Hochdruckwelle verbundenen elektrischen Maschinen unabhängig in einen Generatorzustand oder einen Motorzustand gesteuert werden.

6. Hybridantriebsvorrichtung nach Anspruch 5, **dadurch gekennzeichnet, dass** auch die zweite umkehrbare elektrische Maschine (21) über die elektrische Verbindung (26) mit der Batterie (27) verbunden ist.

7. Hybridantriebsvorrichtung nach einem der Ansprüche 5 oder 6, **dadurch gekennzeichnet, dass** die zweite umkehrbare elektrische Maschine (21) vollständig von der Niederdruckwelle (7) getrennt ist, die mit der Niederdruckwelle verbundene, umkehrbare elektrische Maschine (23) vollständig von der Hochdruckwelle (8) getrennt ist, und die mit der Niederdruckwelle und mit der Hochdruckwelle verbundenen mechanischen Bewegungsgetriebe (22, 25) keinerlei Entkopplungsmittel aufweisen.

8. Flugzeug, **dadurch gekennzeichnet, dass** es eine Hybridantriebsvorrichtung nach einem der vorhergehenden Ansprüche aufweist, wobei die Achse einer horizontalen Querachse des Flugzeugs entspricht.

## Claims

1. Hybrid propulsion device for an aircraft, comprising a turbomachine on which a low pressure shaft (7) is installed, the low pressure shaft (7) carrying a fan (6) located at the turbomachine air intake, a reversible electrical machine (23) associated with the low pressure shaft (7) by a mechanical movement transmission (25), a single-directional clutch (29) located on the low pressure shaft (7) between the fan (6) and a low pressure compressor (1), **characterised in that** the low pressure shaft is composed of two separable and reconnectable portions prolonging each other, the device comprises a case composed of two portions (40, 41), a first of said portions of the case (41) is free to tilt about a transverse axis relative to a second (40) of said portions of the case, one of said portions of the low pressure shaft, the fan (6) and the reversible electrical machine (23) are mounted on the first portion of the case (41), and the other of said portions of the low pressure shaft is mounted on the second portion of the case (40).

2. Hybrid propulsion device according to claim 1, **characterised in that** the clutch (29) is a passive free-wheel device, the clutch (29) changing from a solidarisation state to a released state to increase a ratio between a rotation speed of the fan and a rotation speed of the low pressure compressor, the reversible electrical machine being connected with the transmission (25) to the low pressure shaft between the fan (6) and the clutch (29), and associated by an electrical link (26) with a battery (27) of the aircraft.

3. Hybrid propulsion device according to either claim 1 or 2, **characterised in that** the fan (6) has variable pitch blades with inversion of the thrust direction.

4. Hybrid propulsion device according to claim 1, 2 or 3, **characterised in that** said ratio is equal to 1.

5. Hybrid propulsion device according to any one of claims 1 to 4, **characterised in that** the turbomachine is provided with a high pressure shaft (8), a second reversible electrical machine (21) is associated with the high pressure shaft (8) by a second mechanical movement transmission (22), the electrical machines associated with the low pressure shaft and the high pressure shaft being controlled independently into a generator state or a motor state.

6. Hybrid propulsion device according to claim 5, **characterised in that** the second reversible electrical machine (21) is also associated with said battery (27) by an electrical link (26).

7. Hybrid propulsion device according to any one of claims 5 or 6, **characterised in that** the second reversible electrical machine (21) is completely separate from the low pressure shaft (7), the reversible electrical machine (23) associated with the low pressure shaft is completely separate from the high pressure shaft (8) and the mechanical movement transmissions (22, 25) associated with the low pressure shaft and the high pressure shaft are devoid of any coupling means.

8. An aircraft, **characterised in that** it comprises a hybrid propulsion device according to any of the previous claims, said axis corresponding to a transverse horizontal axis of the aircraft.
